# EUROPÄISCHE PATENTANMELDUNG

(11) **EP 4 566 763 A1**
(43) Veröffentlichungstag der Anmeldung: **11.06.2025**
(21) Anmeldenummer: 24216793.0
(22) Anmeldetag: 02.12.2024
(51) Int. Cl.: B25H 3/06, B29C 45/16, B29C 39/02

(54) **VERFAHREN ZUM HERSTELLEN EINER EINLAGE UND EINLAGE**

(30) Priorität: 08.12.2023 DE 102023134430
(71) Anmelder: Adolf Würth GmbH & Co. KG, 74653 Künzelsau (DE)
(72) Erfinder: HOHL, Wolfgang, 74653 Künzelsau (DE); MERGENTHALER, Marcus, 74357 Bönnigheim (DE); DAUS, Alexander, 74589 Satteldorf (DE)
(74) Vertreter: Patentanwälte Ruff, Wilhelm, Beier, Dauster & Partner mbB

(57) **Zusammenfassung**

Die Erfindung betrifft ein Verfahren zum Herstellen einer Einlage (10) für einen Werkzeugkoffer, eine Schublade, eine Sortimentbox oder dergleichen, in einer Form, wobei die Form im Wesentlichen die Abmessungen der fertiggestellten Einlage (10) aufweist, wobei die Einlage (10) eine Oberseite, eine Unterseite und von der Oberseite ausgehende Vertiefungen zum Anordnen von Kleinteilen, Werkzeug und dergleichen aufweist und wobei die Einlage aus mindestens zwei übereinander angeordneten und miteinander verbundenen Schichten aufgebaut ist, wobei das Herstellen einer ersten Schicht (14) der Einlage am Boden der Form und das Herstellen einer zweiten Schicht (16) der Einlage in der Form auf der ersten Schicht vorgesehen ist.

## Beschreibung

Die Erfindung betrifft ein Verfahren zum Herstellen einer Einlage für einen Werkzeugkoffer, eine Schublade, eine Sortimentbox oder dergleichen, in einer Form, wobei die Form im Wesentlichen die Abmessungen der fertiggestellten Einlage aufweist, wobei die Einlage eine Oberseite, eine Unterseite und von der Oberseite ausgehende Vertiefungen zum Anordnen von Kleinteilen, Werkzeug und dergleichen aufweist und wobei die Einlage aus mindestens zwei übereinander angeordneten und miteinander verbundenen Schichten aufgebaut ist. Die Erfindung betrifft auch eine Einlage für einen Werkzeugkoffer, eine Schublade, eine Sortimentbox oder dergleichen, wobei die Einlage Vertiefungen zum Anordnen von Kleinteilen, Werkzeug und dergleichen aufweist.

Aus der deutschen Offenlegungsschrift DE 10 2009 024 647 A1 ist eine Einlage zur Unterbringung von Werkzeugen, Werkzeugteilen oder ähnlichen Gegenständen bekannt, die Vertiefungen aufweist, die in Form und Größe an die Form und Größe der unterzubringenden Teile angepasst sind. Die Vertiefungen können so dimensioniert sein, dass die Werkzeuge bzw. sonstigen Teile dort mit einer gewissen Klemmkraft festgelegt werden können. Die Einlage besteht aus mindestens zwei Schichten, wobei die Trennfläche zwischen den beiden Schichten im Wesentlichen parallel zur Unterseite bzw. Oberseite der Einlage verläuft. Die Oberseitenschicht und die Unterseitenschicht können eine unterschiedliche Helligkeit sowie auch eine unterschiedliche Farbe aufweisen.

Mit der Erfindung sollen ein Verfahren zum Herstellen einer Einlage und eine Einlage verbessert werden.

Erfindungsgemäß ist hierzu ein Verfahren mit den Merkmalen von Anspruch 1 und eine Einlage mit den Merkmalen von Anspruch 14 vorgesehen. Vorteilhafte Weiterbildungen der Erfindung werden in den Unteransprüchen genannt.

Beim Herstellen einer Einlage für einen Werkzeugkoffer, eine Schublade, eine Sortimentbox oder dergleichen in einer Form, wobei die Form im Wesentlichen die Abmessungen der fertiggestellten Einlage aufweist, wobei die Einlage eine Oberseite, eine Unterseite und von der Oberseite ausgehende Vertiefungen zum Anordnen von Kleinteilen, Werkzeug und dergleichen aufweist und wobei die Einlage aus mindestens zwei übereinander angeordneten und miteinander verbundenen Schichten aufgebaut ist, ist das Herstellen einer ersten Schicht der Einlage am Boden der Form und das Herstellen einer zweiten Schicht der Einlage in der Form auf der ersten Schicht vorgesehen.

Die wenigstens zwei Schichten, die die Einlage bilden, werden infolgedessen in ein- und derselben Form hergestellt. Dadurch ist eine einfachere und kostengünstigere Herstellung der Einlage möglich und dennoch können die beiden Schichten aus Materialien mit unterschiedlichen Eigenschaften hergestellt werden. Die zweite Schicht wird auf der ersten Schicht hergestellt. Da die Herstellung in derselben Form erfolgt und kein Trennmittel auf die erste Schicht aufgetragen wird, können sich die erste Schicht und die zweite Schicht zuverlässig miteinander verbinden. Gegenüber einem konventionellen Herstellungsverfahren, bei dem getrennt hergestellte Schichten aufeinandergelegt und miteinander verklebt werden, kann das erfindungsgemäße Verfahren Zeit, Energie und damit auch erhebliche Kosten einsparen. Insbesondere sind Fehler beim Aufeinanderlegen von Schichten und beim Verkleben der Schichten untereinander prozessbedingt nicht möglich.

In Weiterbildung der Erfindung ist das Einbringen eines ersten, fließfähigen Materials in die Form zum Herstellen der ersten Schicht, das Verfestigen zumindest einer Oberfläche der ersten Schicht, die dem Boden der Form gegenüberliegt, und das Einbringen eines zweiten fließfähigen Materials, das sich vom ersten Material unterscheidet, auf die Oberfläche der ersten Schicht zum Herstellen der zweiten Schicht vorgesehen.

Nach dem Einbringen eines ersten fließfähigen Materials in die Form und somit nach dem Herstellen der ersten Schicht wird gegebenenfalls kurz abgewartet, bis zumindest die Oberfläche der ersten Schicht verfestigt oder zumindest teilweise ausgehärtet ist, und dann wird das zweite fließfähige Material eingebracht. Dadurch wird eine klare Trennung zwischen erster Schicht und zweiter Schicht erreicht und dennoch verbinden sich die erste Schicht und die zweite Schicht zuverlässig ohne Hinzufügen von Kleber oder dergleichen. Es muss dabei nicht abgewartet werden, bis die erste Schicht vollständig verfestigt, beispielsweise ausgehärtet ist. Es genügt vielmehr, dass lediglich die Oberfläche der ersten Schicht, auf die das zweite fließfähige Material aufgebracht wird, ausreichend verfestigt und tragfähig ist, so dass sich das zweite fließfähige Material nicht mit dem ersten Material der ersten Schicht vermischt. Es kann dabei im Rahmen der Erfindung erwünscht sein, dass die Oberfläche der ersten Schicht noch teigig und/oder klebrig ist, um eine besonders gute stoffschlüssige Verbindung der zweiten Schicht mit der ersten Schicht zu gewährleisten.

In Weiterbildung der Erfindung erfolgt das Einbringen des ersten fließfähigen Materials in die Form mittels Gießen oder Spritzen, wobei das erste Material in der Form nicht aufschäumt, und das Einbringen des zweiten Materials auf die Oberfläche der ersten Schicht und Herstellen der zweiten Schicht mittels Aufschäumen des zweiten Materials.

Beispielsweise wird die erste Schicht in die Form eingegossen und verteilt sich unter Einwirkung der Schwerkraft in der Form am Boden der Form. Der Boden der Form bildet in der Regel die Oberseite der fertiggestellten Einlage, also die Oberseite, die im Gebrauch der Einlage einem Benutzer zugewandt ist. Das erste Material wird in der Form nicht aufgeschäumt und bildet dadurch eine kompakte, porenfreie Oberfläche. Das zweite Material wird in der Form aufgeschäumt und kann dann beispielsweise dazu benutzt werden, Werkzeug oder Kleinteile in Vertiefungen einzuklemmen. Das aufgeschäumte zweite Material bietet dabei ausreichend Klemmkraft, um das Werkzeug oder die Kleinteile sicher festzuhalten, auf der anderen Seite ist die Klemmkraft aber ausreichend gering, um das Werkzeug bzw. die Kleinteile wieder problemlos aus der Einlage herausnehmen zu können.

In Weiterbildung der Erfindung ist das vollständige Bedecken eines Bodens der Form mit dem ersten fließfähigen Material vorgesehen.

Die vollständige Oberseite der Einlage ist beispielsweise durch die erste Schicht gebildet und die erste Schicht weist Durchbrüche auf, von denen die Vertiefungen ausgehen.

In Weiterbildung der Erfindung ist das vollständige Auffüllen der Form beim Herstellen der zweiten Schicht nach dem Herstellen der ersten Schicht vorgesehen.

In Weiterbildung der Erfindung ist das teilweise Auffüllen der Form beim Herstellen der zweiten Schicht nach dem Herstellen der ersten Schicht und das vollständige Auffüllen der Form beim Herstellen einer dritten Schicht nach dem Herstellen der zweiten Schicht vorgesehen.

Beispielsweise weisen die erste Schicht und die dritte Schicht keine Poren auf, wohingegen die zweite Schicht schaumstoffartig ausgebildet ist. Die Einlage kann dadurch sehr gut gehandhabt werden und beispielsweise auch problemlos in eine Werkzeugkiste eingeklebt oder in sonstiger Weise in der Werkzeugkiste fixiert werden, da die dritte Schicht porenfrei ausgebildet ist und entweder gut verklebt werden kann oder auch mittels Rastelementen in einem Behältnis, beispielsweise einem Werkzeugkoffer, gesichert werden kann. Die zweite Schicht kann hingegen schaumstoffartig ausgebildet sein, um eine Klemmkraft auf Kleinteile oder Werkzeug in der Einlage auszuüben.

In Weiterbildung der Erfindung erfolgt das Einbringen des ersten Materials und des zweiten Materials in die Form mittels Kunststoffspritzguss.

Mittels Kunststoffspritzguss können Einlagen in großer Stückzahl kostengünstig, prozesssicher und mit eng tolerierten Abmessungen hergestellt werden.

In Weiterbildung der Erfindung ist das erste Material und/oder das zweite Material im verfestigten Zustand schaumstoffartig ausgebildet.

In Weiterbildung der Erfindung ist das erste Material im ausgehärteten Zustand im Wesentlichen porenfrei ausgebildet und das zweite Material ist im ausgehärteten Zustand schaumstoffartig ausgebildet.

Das erste Material, das die Oberseite der fertiggestellten Einlage bildet, wobei die Oberseite im Gebrauch einem Benutzer zugewandt ist, kann dadurch glattflächig, mit einer gewünschten Oberflächenstruktur und/oder mit Schriftfeldern oder dergleichen versehen werden. Die porenfreie Oberseite ist dann gut pflegbar und kann auch Designmerkmale, wie beispielsweise eine Struktur einer Carbongewebeschicht, aufweisen. Das schaumstoffartige zweite Material sorgt dann für eine erforderliche Klemmkraft, um Werkzeuge oder Kleinteile in der Einlage festzuhalten.

In Weiterbildung der Erfindung ist das erste Material im verfestigten Zustand härter als das zweite Material im verfestigten Zustand.

In Weiterbildung der Erfindung weist das erste Material eine erste Farbe auf und das zweite Material weist eine zweite Farbe auf, die sich von der ersten Farbe unterscheidet.

In Weiterbildung der Erfindung ist das Herstellen der Einlage so vorgesehen, dass eine Oberfläche der zweiten Schicht einen Grund einer Vertiefung in der Einlage bildet und dass die Wände der Vertiefung abschnittsweise mittels der ersten Schicht gebildet sind, so dass die Wände der Vertiefung abschnittsweise eine andere Farbe haben als der Grund der Vertiefung.

Auf diese Weise lässt sich in sehr einfacher Weise von einem Benutzer erkennen, ob eine Vertiefung mit einem Werkzeug oder einem Kleinteil gefüllt ist oder ob die Vertiefung leer ist.

In Weiterbildung der Erfindung unterscheiden sich die erste Farbe und die zweite Farbe in der Helligkeit und/oder der Leuchtkraft deutlich, insbesondere ist entweder die erste oder die zweite Farbe eine Signalfarbe.

In Weiterbildung der Erfindung ist das Herstellen eines Grunds einer Vertiefung der Einlage abschnittsweise aus dem ersten Material und abschnittsweise aus dem zweiten Material vorgesehen.

Auf diese Weise kann der Grund der Vertiefung eine auffällige, gemusterte Ausbildung haben, so dass ein Benutzer sofort erkennen kann, ob eine Vertiefung leer ist oder mit einem Werkzeug oder einem Kleinteil gefüllt ist.

In Weiterbildung der Erfindung ist das Herstellen einer Oberfläche der ersten Schicht, wobei die Oberfläche der ersten Schicht eine Oberseite der Einlage bildet, die einem Benutzer zugewandt ist, mit einer Oberflächenstruktur und/oder mit wenigstens einem Schriftfeld vorgesehen.

Das Herstellen einer Oberflächenstruktur und/oder wenigstens eines Schriftfelds kann beispielsweise durch entsprechende Gestaltung des Bodens der Form erfolgen.

In Weiterbildung der Erfindung besteht die erste Schicht und/oder die zweite Schicht aus Kunststoff, insbesondere aus aufgeschäumtem Kunststoff.

In Weiterbildung der Erfindung weist die erste und/oder die zweite Schicht Polyurethan (PU), Polypropylen (PP), expandiertes Polypropylen (EPP) und/oder Ethylen-Vinylacetat-Copolymer (EVA oder EVAC) auf.

In Weiterbildung der Erfindung ist das Herstellen einer Oberfläche der ersten Schicht, wobei die Oberfläche der ersten Schicht eine Oberseite der Einlage bildet, mit einer maschinenlesbaren Markierung, insbesondere einer optisch erkennbaren Markierung, vorgesehen.

Auf diese Weise kann beim maschinellen Bestücken der Einlage eine Orientierung für eine Bestückungsmaschine, insbesondere einen Roboter oder dergleichen, bereitgestellt werden.

In Weiterbildung der Erfindung ist das Einbetten eines RFID-Chips in die erste und/oder die zweite Schicht vorgesehen.

Mittels eines RFID-Chips kann beispielsweise ein Artikel, entweder die Einlage oder die bestückte Einlage, identifiziert werden. Beispielsweise kann das Gewicht der bestückten Einlage hinterlegt werden, so dass durch einfaches Wiegen festgestellt werden kann, ob eine Einlage vollständig bestückt ist oder ob Teile fehlen. Auch beim Entnehmen eines Werkzeugkastens aus einem Regal oder einem Fahrzeug kann mittels des RFID-Chips festgestellt werden, welcher Werkzeugkasten entfernt wird und/oder wo sich der Werkzeugkasten in einem Regal befindet.

Die der Erfindung zugrunde liegende Aufgabe wird auch durch eine Einlage für einen Werkzeugkoffer, eine Schublade, eine Sortimentbox oder dergleichen gelöst, wobei die Einlage Vertiefungen zum Anordnen von Kleinteilen, Werkzeug und dergleichen aufweist und wobei die Einlage mit dem erfindungsgemäßen Verfahren hergestellt ist.

Weitere Merkmale und Vorteile der Erfindung ergeben sich aus den Ansprüchen und der folgenden Beschreibung einer bevorzugten Ausführungsform der Erfindung im Zusammenhang mit den Zeichnungen. In den Zeichnungen zeigen:
- Fig. 1: eine Draufsicht auf eine erfindungsgemäße Einlage und
- Fig. 2: eine Ansicht auf die Schnittebene A-A in Fig. 1.

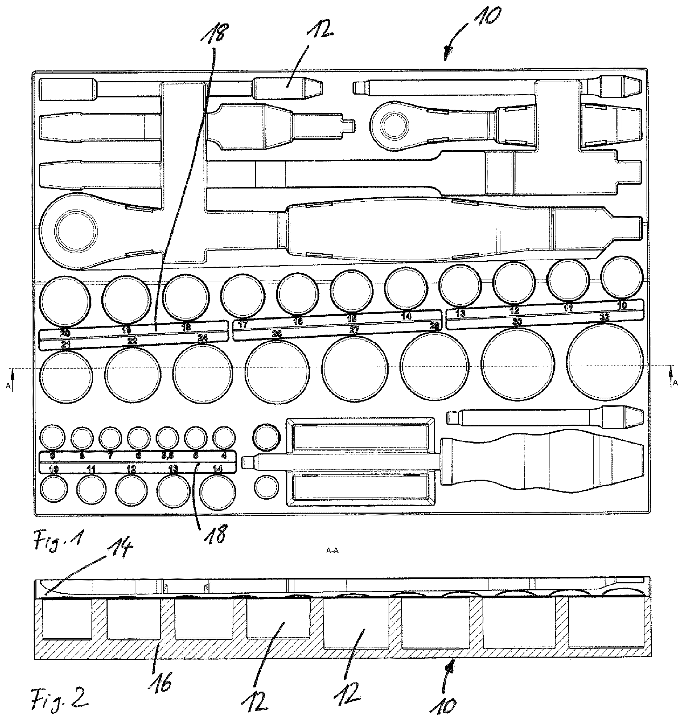

Fig. 1 zeigt eine Einlage 10 für Werkzeug. Die Einlage 10 weist mehrere Vertiefungen 12 auf, die in Form und Abmessungen auf in die Vertiefungen einzulegendes Werkzeug abgestimmt sind. Die Einlage 10 ist für einen sogenannten Steckschlüsselkasten vorgesehen und weist infolgedessen kreisrunde Vertiefungen für sogenannte Nüsse und langgestreckte Vertiefungen für Verlängerungen und Umschaltknarren auf.

Fig. 2 zeigt eine Ansicht auf die Schnittebene A-A in Fig. 1. Die Schnittebene verläuft durch eine Reihe von kreisrunden Vertiefungen 12, die eine unterschiedliche Tiefe aufweisen und die zum Aufnehmen von Nüssen vorgesehen sind. Als Nuss oder Schraubnuss wird ein Bauteil bezeichnet, das den Kopf einer Schraube oder eine Mutter aufnehmen kann und das darüber hinaus mit einer Vertiefung oder einem Vorsprung versehen ist, um mit einer Rätsche oder einer Verlängerung verbunden zu werden.

Fig. 2 lässt erkennen, dass die Einlage 10 aus zwei Schichten aufgebaut ist. Eine erste Schicht 14 bildet eine Oberseite der Einlage 10. Die erste Schicht 14 weist Durchbrüche auf, über die die Vertiefungen 12 in einer zweiten Schicht 16 zugänglich sind.

Die Einlage 10 wird in einer Form mittels Kunststoffspritzguss hergestellt, wobei die Form im Wesentlichen die Abmessungen der fertiggestellten Einlage 10 aufweist. Die Form weist infolgedessen von einem Boden der Form ausgehende Vorsprünge oder Erhebungen auf, wobei die Abmessungen der Vorsprünge oder Erhebungen im Wesentlichen den Abmessungen der Vertiefungen 12 entsprechen.

Beim Herstellen der Einlage 10 wird zunächst ein erstes fließfähiges Material in die Form eingefüllt und am Boden der Form verteilt. Wie in Fig. 2 zu erkennen ist, liegt die Oberseite der ersten Schicht 14 auf dem Boden der Form auf und nach dem Entnehmen der fertiggestellten Einlage 10 bildet die durch den Boden der Form geformte Oberseite der ersten Schicht 14 die Oberseite der Einlage 10.

Die erste Schicht wird flächig auf dem Boden der Form verteilt, jedoch nur bis zu einer Schichthöhe eingefüllt, so dass die Vorsprünge oder Erhebungen in der Form über die erste Schicht 14 hinausragen. Der Boden der Form ist darüber hinaus so gestaltet, dass Schriftfelder 18 auf der Oberseite der ersten Schicht ausgebildet werden.

Nach dem Einfüllen des ersten fließfähigen Materials und nach dem Ausbilden der ersten Schicht 14 wird gegebenenfalls kurz abgewartet, bis eine dem Boden der Form abgewandte Oberfläche der ersten Schicht ausreichend verfestigt ist, um ein zweites fließfähiges Material zum Herstellen der zweiten Schicht 16 aufbringen zu können, ohne dass sich das erste Material der ersten Schicht 14 mit dem zweiten Material der zweiten Schicht 16 vermischt. Die Oberfläche der ersten Schicht kann aber beispielsweise noch pastös und/oder klebrig sein, um eine gute stoffschlüssige Verbindung zwischen der Oberfläche der ersten Schicht und dem zweiten fließfähigen Material, letztendlich also mit der zweiten Schicht 16, ausbilden zu können. Nach dem Einbringen des zweiten fließfähigen Materials in die Form oder auch mit dem Einbringen des zweiten fließfähigen Materials in die Form wird das zweite Material aufgeschäumt, so dass die zweite Schicht 16 Poren aufweist und schaumstoffartig ausgebildet ist. Die erste Schicht 14 ist hingegen vorteilhafterweise porenfrei und aus kompaktem Material ausgebildet. Dadurch kann eine Oberseite der Einlage glattflächig und mit gut erkennbaren Schriftfeldern 18 ausgebildet sein. Die zweite Schicht 16 besteht hingegen aus einem schaumstoffartigen Material, so dass beispielsweise die Stecknüsse, die in die Vertiefungen 12 eingeschoben werden, das Material der zweiten Schicht 16 leicht zusammendrücken können und die zweite Schicht dadurch eine Klemmkraft auf die Stecknüsse ausübt. Diese Klemmkraft ist dabei ausreichend, damit die Stecknüsse im normalen Betrieb der Einlage 10 nicht aus den Vertiefungen 12 herausfallen und beim Transport der Einlage 10 auch nicht klappern. Auf der anderen Seite ist die Klemmkraft so gering, dass die Stecknüsse oder anderes Werkzeug problemlos von Hand aus der Einlage 10 entnommen werden können.

Die beiden Schichten 14, 16 können in einer unterschiedlichen Farbe hergestellt sein. Beispielsweise kann die zweite Schicht 16 aus dem zweiten Material mit einer Leuchtfarbe gebildet sein, wohingegen die erste Schicht beispielsweise schwarz ist. Ein Benutzer kann dadurch sofort erkennen, ob eine Vertiefung 12 mit einem Werkzeug oder einem Kleinteil gefüllt ist oder ob die Vertiefung leer ist.

Mit dem erfindungsgemäßen Verfahren ist es möglich, die Einlage 10 in einem einzigen Werkzeug und dabei aus zwei Schichten 14, 16 aus unterschiedlichen Materialien herzustellen. Das erfindungsgemäße Verfahren erlaubt dadurch die kostengünstige Herstellung der Einlage 10.

## Patentansprüche

1. Verfahren zum Herstellen einer Einlage für einen Werkzeugkoffer, eine Schublade, eine Sortimentbox oder dergleichen, in einer Form, wobei die Form im Wesentlichen die Abmessungen der fertiggestellten Einlage aufweist, wobei die Einlage eine Oberseite, eine Unterseite und von der Oberseite ausgehende Vertiefungen zum Anordnen von Kleinteilen, Werkzeug und dergleichen aufweist und wobei die Einlage aus mindestens zwei übereinander angeordneten und miteinander verbundenen Schichten aufgebaut ist, **gekennzeichnet durch** Herstellen einer ersten Schicht der Einlage am Boden der Form und Herstellen einer zweiten Schicht der Einlage in der Form auf der ersten Schicht.

2. Verfahren nach Anspruch 1, **gekennzeichnet durch** Einbringen eines ersten, fließfähigen Materials in die Form zum Herstellen der ersten Schicht, Verfestigen zumindest einer Oberfläche der ersten Schicht, die dem Boden der Form gegenüberliegt, und Einbringen eines zweiten fließfähigen Materials, das sich vom ersten Material unterscheidet, auf die Oberfläche der ersten Schicht zum Herstellen der zweiten Schicht.

3. Verfahren nach Anspruch 2, **gekennzeichnet durch** Einbringen des ersten fließfähigen Materials in die Form mittels Gießen oder Spritzen, wobei das erste Material in der Form nicht aufschäumt, und Einbringen des zweiten Materials auf die Oberfläche der ersten Schicht und Herstellen der zweiten Schicht mittels Aufschäumen des zweiten Materials, und/oder **gekennzeichnet durch** vollständiges Bedecken eines Bodens der Form mit dem ersten fließfähigen Material.

4. Verfahren nach Anspruch 2 oder 3, **gekennzeichnet durch** vollständiges Auffüllen der Form beim Herstellen der zweiten Schicht nach dem Herstellen der ersten Schicht.

5. Verfahren nach Anspruch 2 oder 3, **gekennzeichnet durch** teilweises Auffüllen der Form beim Herstellen der zweiten Schicht nach dem Herstellen der ersten Schicht und vollständiges Auffüllen der Form beim Herstellen einer dritten Schicht nach dem Herstellen der zweiten Schicht.

6. Verfahren nach wenigstens einem der vorstehenden Ansprüche, **gekennzeichnet durch** Einbringen des ersten Materials und des zweiten Materials in die Form mittels Kunststoffspritzguss.

7. Verfahren nach wenigstens einem der vorstehenden Ansprüche, **dadurch gekennzeichnet, dass** das erste Material und/oder das zweite Material im verfestigten Zustand schaumstoffartig ausgebildet sind, wobei insbesondere das erste Material im ausgehärteten Zustand im wesentlichen porenfrei ausgebildet ist und dass das zweite Material im ausgehärteten Zustand schaumstoffartig ausgebildet ist.

8. Verfahren nach wenigstens einem der vorstehenden Ansprüche, **dadurch gekennzeichnet, dass** das erste Material im verfestigten Zustand härter ist als das zweite Material im verfestigten Zustand.

9. Verfahren nach wenigstens einem der vorstehenden Ansprüche **dadurch gekennzeichnet, dass** das erste Material eine erste Farbe aufweist und dass das zweite Material eine zweite Farbe aufweist, die sich von der ersten Farbe unterscheidet, insbesondere **gekennzeichnet durch** Herstellen der Einlage, so dass eine Oberfläche der zweiten Schicht einen Grund einer Vertiefung in der Einlage bildet und dass die Wände der Vertiefung abschnittsweise mittels der ersten Schicht gebildet sind, so dass die Wände der Vertiefung abschnittsweise eine andere Farbe haben als der Grund der Vertiefung, insbesondere **dadurch gekennzeichnet, dass** die erste Farbe und die zweite Farbe sich in der Helligkeit und/oder der Leuchtkraft deutlich unterscheiden, insbesondere dass entweder die erste oder die zweite Farbe eine Signalfarbe ist, insbesondere **gekennzeichnet durch** Herstellen eines Grunds einer Vertiefung der Einlage abschnittsweise aus dem ersten Material und abschnittsweise aus dem zweiten Material.

10. Verfahren nach wenigstens einem der vorstehenden Ansprüche, **gekennzeichnet durch** Herstellen einer Oberfläche der ersten Schicht, wobei die Oberfläche der ersten Schicht eine Oberseite der Einlage bildet, die einem Benutzer zugewandt ist, mit einer Oberflächenstruktur und/oder mit wenigstens einem Schriftfeld.

11. Verfahren nach wenigstens einem der vorstehenden Ansprüche, **dadurch gekennzeichnet, dass** die erste Schicht und/oder die zweite Schicht aus Kunststoff besteht, insbesondere aus aufgeschäumtem Kunststoff, wobei insbesondere die erste und/oder zweite Schicht Polyurethan (PU), Polypropylen (PP), expandiertes Polypropylen (EPP) und/oder Ethylen-Vinylacetat-Copolymer (EVA oder EVAC) aufweist.

12. Verfahren nach wenigstens einem der vorstehenden Ansprüche, **gekennzeichnet durch** Herstellen einer Oberfläche der ersten Schicht, wobei die Oberfläche der ersten Schicht eine Oberseite der Einlage bildet, mit einer maschinenlesbaren Markierung, insbesondere optisch erkennbaren Markierung.

13. Verfahren nach wenigstens einem der vorstehenden Ansprüche, **gekennzeichnet durch** Einbetten eines RFID-Chips in die erste und/oder die zweite Schicht.

14. Einlage für einen Werkzeugkoffer, eine Schublade, eine Sortimentbox oder dergleichen, wobei die Einlage Vertiefungen zum Anordnen von Kleinteilen, Werkzeug und dergleichen aufweist, **dadurch gekennzeichnet, dass** die Einlage mit einem Verfahren nach wenigstens einem der vorstehenden Ansprüche hergestellt ist.
